# EUROPEAN PATENT SPECIFICATION

(11) **EP 2 677 513 B1**
(45) Date of publication and mention of the grant of the patent: **13.02.2019**
(21) Application number: 13172753.9
(22) Date of filing: 19.06.2013
(51) Int. Cl.: G09F 23/00, G09F 3/10

(54) **Decoration film having mirror effect and manufacturing method**
Verzierungsfolie mit Spiegeleffekt und Produktionsverfahren
Film de décoration ayant un effet de miroir et procédé de fabrication

(30) Priority: 22.06.2012 KR 20120067074
(43) Date of publication of application: 25.12.2013
(73) Proprietor: LG Electronics Inc., Yeongdeungpo-gu SEOUL, 07336 (KR)
(72) Inventor: Shin, Jiwon, Gyeongsangnam-do, 642-711 (KR); Jeong, Seokjae, 137-724 Seoul (KR); Jung, Hyungi, 137-724 Seoul (KR)
(74) Representative: Ter Meer Steinmeister & Partner

(56) References cited:
- WO-A1-94/10589
- CN-A- 102 501 465
- KR-A- 20110 018 588
- US-A1- 2012 121 832
- US-B1- 6 479 142

## Description

### CROSS-REFERENCE TO RELATED APPLICATION

This application claims priority from Korean Application No. 10-2012-0067074, filed June 22, 2012.

### FIELD

The present disclosure relates to a decoration film having a mirror effect, which may be used in decoration panels or the like of various home appliances, such as a refrigerator, an air conditioner, and a washing machine.

### BACKGROUND

US 2012/121832 A1 describes a decoration panel for a home appliance and a home appliance equipped with the decoration panel. The decoration panel has: a green glass defining the external appearance of the appliance; a first film disposed on a rear side of the green glass; and a base supporting layer supporting the first film from a rear side of the first film. The first film includes: a first base layer formed on the rear side of the green glass; a printed layer formed on a rear side of the first base layer by gravure printing; and a first reflective layer printed with a print ink containing a white inorganic pigment on a rear side of the printed layer by gravure printing to shield the green color of the green glass.

US 6479142 B1 describes an outdoor advertising or display system including a multi-layer graphic article intended for application to an outdoor surface such as concrete, asphalt and the like. The advertising system includes an image-protective surface layer that can be laminated to a base layer following imaging of the base layer. The image-protective surface layer may be protected by a readily removable release liner.

CN 102501465 A describes a bronze brass composite film that has a printing coloring layer, a PET (Polyethylene Terephthalate) film layer, an adhesive layer and a PVC (Polyvinyl Chloride) film layer. The printing coloring layer is arranged on one side of the PET film layer and a vacuum aluminized film layer is arranged on the other side. The PVC film layer is bonded with the vacuum aluminized film layer by using the adhesive layer. In another example, the PVC film is replaced with PET film.

KR 2011/0018588 A describes an exterior decorative member of an electronic product which can embody a metallic texture without using a stainless steel plate, and which includes a base layer, a pattern layer, a metal evaporating layer, and a protective layer. The base layer is a synthetic resin.

WO 94/10589 A1 describes a formable multilayer reflective polymeric body which has a substantially uniform broad bandwidth reflectance over substantially the entire range of the visible spectrum. The body includes at least first and second diverse polymeric materials, the body comprising a sufficient number of alternating layers of the first and second polymeric materials such that at least 40 percent of visible light incident on the body is reflected. Layers have a gradient of optical layer repeat unit thicknesses.

In general, a main body or door made of steel iron, plastic, or the like is used in various types of home appliances, such as a refrigerator, an air conditioner, a washing machine, a cooking appliance, an air-conditioning system and a dish washer. A decoration panel capable of
representing various colors, textures, patterns, etc. may be mounted at the front side of the main body or door.

In addition to unique functions of home appliances, the external appearances and designs of the home appliances may be important factors in customers' purchase decisions. For example, nickel (Ni) is directly deposited on a rear side of glass in order to provide a mirror effect to a decoration panel of a home appliance, such as a refrigerator.

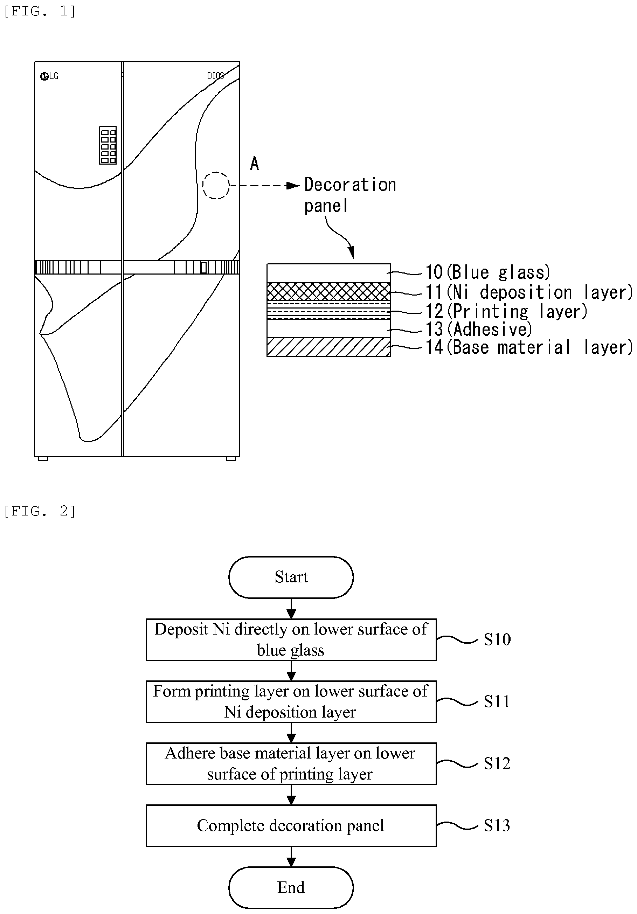

FIGS. 1 and 2 illustrate the laminated structure and manufacturing process of a conventional decoration panel. Nickel (Ni) is directly deposited on a lower surface of a blue glass (or green glass) 10 (S10). The blue glass 10 may be used instead of white glass because blue glass is generally less expensive than white glass. A printing layer 12 is formed, using a silk screen method (S11), on a lower surface of a Ni deposition layer 11 formed by depositing the nickel (Ni). Then, a base material layer 14 made of a PVC material is adhered to a lower surface of the printing layer 12, using an adhesive 13 (S12), thereby completing the decoration panel having a mirror effect (S13).

However, in a case where nickel (Ni) is directly deposited on the lower surface of the blue glass 10 as described above, the failure rate of the decoration panel in the Ni deposition process may be relatively high. Further, since the manufacturing process of the decoration panel is of a discontinuous batch type, the productivity of the decoration panel may be relatively low, and therefore, manufacturing cost may be increased.

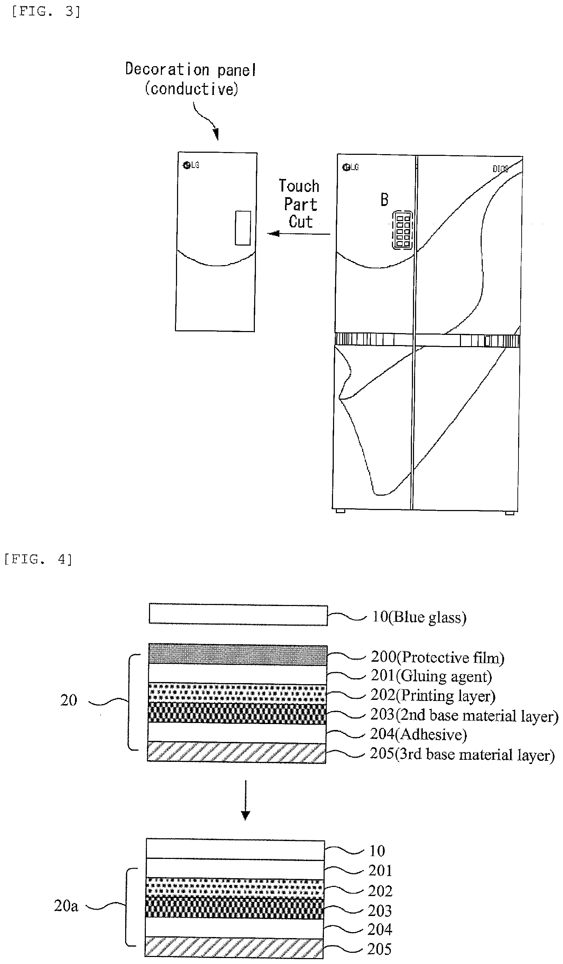

Moreover, in a case where the nickel (Ni) is directly deposited on the lower surface of the blue glass 10 as described above, the decoration panel may be entirely conductive. Hence, as shown in FIG. 3, a partial region is removed to accommodate a manipulation portion (B of FIG. 3) that receives user input. The partial region is removed to reduce the likelihood of malfunction caused by the conductivity of the decoration panel. Therefore, the operating process of the decoration panel may be complicated, and the productivity of the decoration panel may be lowered.

### SUMMARY

The invention is indicated in the independent claims. Further embodiments are indicated in the dependent claims.

In one aspect, a decoration film includes a second base layer, a third base layer, and a printing layer. The second base layer is a non-conductive mirror polyethylene terephthalate (PET) film. The third base layer is a scattering prevention film and is adhered to the second base layer by an adhesive. The printing layer, the second base layer, and the third base layer are sequentially laminated. The decoration film also includes a gluing agent configured to enable the decoration film to be attached to a glass panel, thereby obtaining a panel with a mirror effect.

In some implementations, the decoration film may include a first base layer. In these implementations, the first base layer may be a PET film and the gluing agent may be coated on a surface of the first base layer. Also, in these implementations, the printing layer may be formed on a surface of the second base layer and the first base layer may be adhered to the second base layer by an adhesive. Further, in these implementations, the PET film may be an optical PET film having high optical transmittance.

In addition, the non-conductive mirror PET film may include a plurality of polymer layers having different refractive indices and thicknesses. The printing layer may be formed using a micro gravure method. The gluing agent may include an optical clear adhesive (OCA).

In some examples, the decoration film may include a protective film adhered on the gluing agent. In these examples, the protective film may be configured to separate from the gluing agent in a process of attaching the decoration film to the glass panel. Further, in these examples, the gluing agent may include a double-faced tape, the protective film may be attached to a first side of the double-faced tape, and OCA may be coated on a second side of the double-faced tape that is opposite of the first side of the double-faced tape.

The scattering prevention film may be one of a polyethylene (PE) film and a poly vinyl chloride (PVC) film. The decoration film maybe a roll-type decoration film.

In another aspect, a method of manufacturing a decoration film includes forming a printing layer on a second base layer. The second base layer is a non-conductive mirror PET film. The method also includes coating an adhesive on a surface of the second base layer that is opposite of the printing layer and adhering a third base layer to the second base layer using the adhesive coated on the surface of the second base layer. The third base layer is a scattering prevention film. The method further includes adhering a protective film to the printing layer using a gluing agent that has high optical transmittance and that is coated on the protective film.

In a further aspect, a method of manufacturing a decoration film includes forming a printing layer on a surface of a second base layer. The second base layer is a non-conductive mirror PET film. The method also includes coating an adhesive on a surface of the printing layer and adhering a first base layer to the printing layer using the adhesive coated on the surface of the printing layer. The first base layer is a PET film. The method further includes coating an adhesive on a surface of the second base layer and adhering a third base layer to the second base layer using the adhesive coated on the surface of the second base layer. The third base layer is a scattering prevention film. In addition, the method includes adhering a protective film to a surface of the first base layer using a gluing agent that has high optical transmittance and that is coated on the protective film.

In another aspect, a decoration panel includes a glass panel and a decoration film. The decoration film includes a second base layer, a third base layer, and a printing layer. The second base layer is a non-conductive mirror PET film. The third base layer is a scattering prevention film and is adhered to the second base layer by an adhesive. The printing layer, the second base layer, and the third base layer are sequentially laminated. The decoration film also includes a gluing agent that attaches the decoration film to the glass panel, thereby obtaining a mirror effect.

In some implementations, the decoration film may include a first base layer. In these implementations, the first base layer may be a PET film and the gluing agent may be coated on a surface of the first base layer. Further, in these implementations, the printing layer may be formed on a surface of the second base layer and the first base layer may be adhered to the second base layer by an adhesive.

In addition, the non-conductive mirror PET film may include a plurality of polymer layers having different refractive indices and thicknesses. Also, the printing layer may be formed using a micro gravure method.

The details of one or more implementations are set forth in the accompanying drawings and the description below. Other features will be apparent from the description and drawings, and from the claims.

### BRIEF DESCRIPTION OF THE DRAWINGS

FIG. 1 illustrates a laminated structure of a conventional decoration panel of a home appliance;
FIG. 2 is a flowchart illustrating a process of manufacturing the conventional decoration panel of the home appliance;
FIG. 3 illustrates an example of removing a partial region of the decoration panel shown in FIG. 1;
FIG. 4 illustrates an example laminated structure of an example decoration film;
FIG. 5 illustrates characteristics of reflectance with respect to frequency of a non-conductive mirror polyethylene terephthalate (PET) film;
FIGS. 6 and 7 are flowcharts illustrating an example process of manufacturing the example decoration film shown in FIG. 4;
FIG. 8 illustrates an example laminated structure of another example decoration film;
FIG. 9 is a flowchart illustrating an example process of manufacturing the example decoration film shown in FIG. 8;
FIG. 10 illustrates an example laminated structure of yet another example decoration film; and
FIG. 11 is a flowchart illustrating an example process of manufacturing the example decoration film shown in FIG. 10.

### DETAILED DESCRIPTION

FIG. 4 illustrates an example laminated structure of an example decoration film 20, that does not form part of the invention, for better understanding of features of the invention. For example, a glass 10 can be used for a decoration panel of a home appliance, such as a refrigerator. In this example, the glass 10 may be white glass or blue glass, which is generally less expensive than white glass.

A decoration film 20a having a protective film 200 removed therefrom is attached to a rear side of the blue glass 10 by a gluing agent 201, thereby forming a mirror effect. As shown in FIG. 4, the decoration film 20 has a structure in which the protective film 200, the gluing agent 201, a printing layer 202, a second base material layer 203, an adhesive 204 and a third base material layer 205 are laminated.

The protective film 200 is a simple cover film attached to the gluing agent 201 in order to keep the decoration film as a roll-type film. The protective film 200 may be separated by a continuous roll-to-roll type manufacturing process of attaching the decoration film 20a to the rear side of the blue glass 10.

The gluing agent 201 is coated on the printing layer 202 in order to allow the decoration film 20a to be adhered to the rear side of the blue glass 10. The gluing agent 201 can include a roll-type gluing agent having high optical transmittance, e.g., an optical clear adhesive (OCA) that is an optical transparent double-faced tape. The gluing agent 201 can have a structure in which the protective film is attached to one face of the optical transparent double-faced tape and a gluing agent having high transmittance is coated on the other face of the optical transparent double-faced tape.

The printing layer 202 is printed on the second base material layer 203, using a gravure method, so as to design a color of the decoration panel. In order to design a more luxurious color of the decoration panel, a micro gravure method having a printing density higher than that of a general gravure method can be applied to the printing layer 202.

The second base material layer 203 is a roll-type film that has the mirror effect without directly depositing nickel (Ni) on the rear side of the blue glass and has a characteristic of non-conductivity. The second base material layer 203 can include a non-conductive mirror polyethylene terephthalate (PET) film.

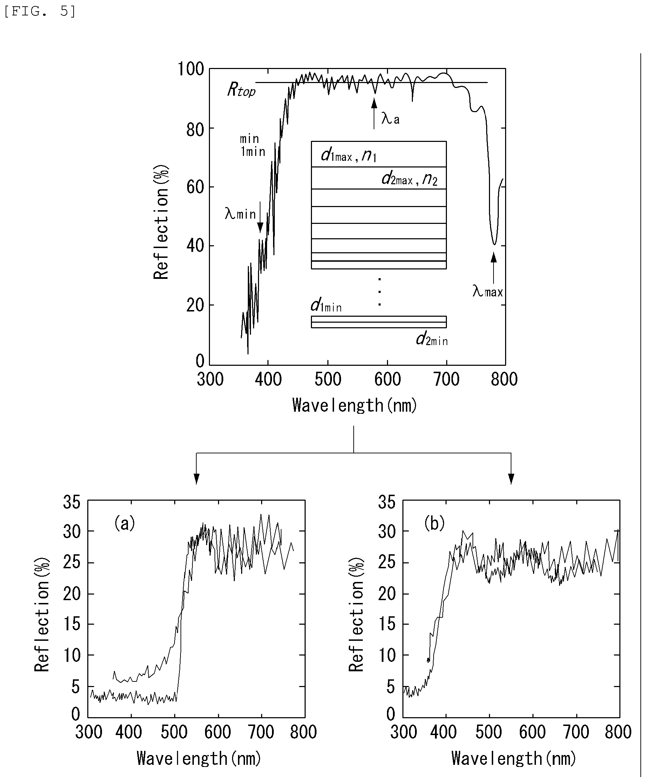

As shown in FIG. 5, the non-conductive mirror PET film simultaneously has the mirror effect and the characteristic of non-conductivity by laminating several polymer layers having different refractive indices (n) and thicknesses d. Wavelength bands in a visual light region are almost totally reflected, and the other wavelength bands are absorbed, and hence the mirror effect is obtained.

The wavelength (nm) of reflected light is changed depending on the refractive indices (n) and thicknesses (d) of the laminated polymer layers, and thus the reflection and color of the non-conductive mirror PET film can be controlled as shown in FIG. 5. The third base material layer 205 is adhered to a lower surface of the second base material layer 203 by the adhesive 204. In this case, the third base material layer 205 is a scattering prevention film for protecting a film laminated thereon and allowing the film to be adhered even after glass is broken. The third base material layer 205 can include any one of a polyethylene (PE) film and a poly vinyl chloride (PVC) film.

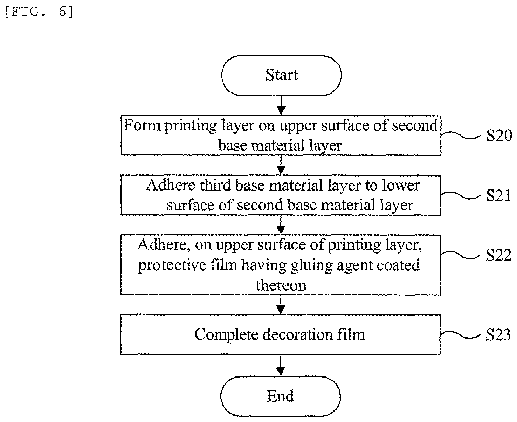

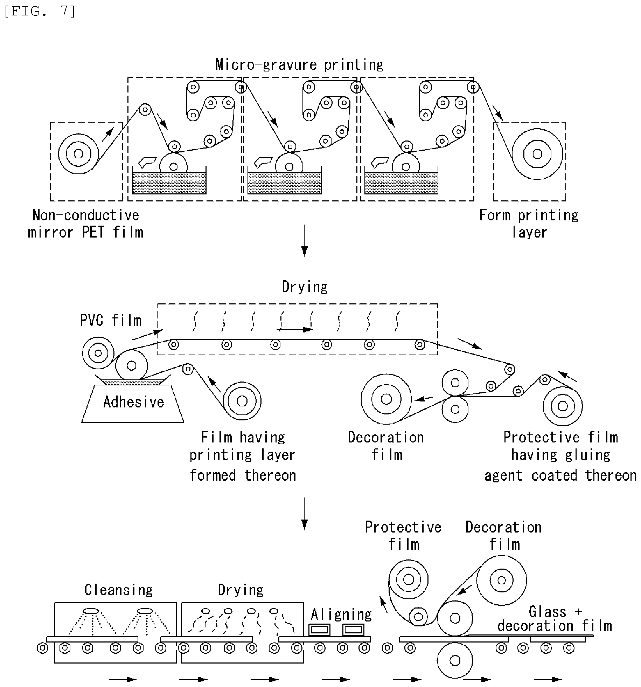

FIGS. 6 and 7 illustrate an example process of manufacturing the decoration film, that does not form part of the invention, for better understanding of features of the invention. First, the printing layer 202 is formed on an upper surface of the second base material layer 203 that is the non-conductive mirror PET film simultaneously having the mirror effect and the characteristic of non-conductivity as described above, using a micro gravure method (S20), thereby designing a luxurious color of the decoration panel.

The adhesive 204 is coated on the lower surface of the second base material layer 203, and the third base material layer 205 as a scattering prevention film, including any one of the PE film and the PVC film, is adhered to the second base material layer 203 (S21).

The OCA that is a roll-type optical transparent double-faced tape having high optical transmittance is attached to the upper surface of the printing layer 202. For example, the protective film 200 is attached to one surface of the printing layer 202, and the optical transparent double-faced tape, on which the gluing agent having high optical transmittance is coated, is adhered to the upper surface that is the other surface of the printing layer 202 (S22), thereby completing the roll-type decoration film 20 (S23).

That is, the decoration film 20, as shown in FIG. 7, is produced by a continuous roll-to-roll manufacturing process. In the manufacturing process, the printing layer 202 is formed on the upper surface of the non-conductive mirror PET film through multi stages, using the micro gravure method.

The PVC film or PE film is adhered to the non-conductive mirror PET film having the printing layer formed thereon by coating an adhesive on the lower surface of the non-conductive mirror PET film, and a drying process is then performed. Subsequently, a protective film, on which a gluing agent having high optical transmittance is coated, is adhered on the upper surface of the printing layer, thereby completing the decoration film.

A blue glass to which the decoration film is to be attached, as shown in FIG. 7, passes through a preprocess including cleansing, drying, aligning and the like. Subsequently, the protective film attached to the uppermost layer of the decoration film 20 is separated from the decoration film 20, so that the decoration panel is continuously produced through a simple manufacturing process in which the decoration film 20a is adhered to the rear side of the blue glass.

Thus, the process of directly depositing the nickel (Ni) on the rear side of the blue glass is removed, and the decoration film is manufactured through the continuous roll-type manufacturing process other than a discontinuous batch-type manufacturing process, so that it may be possible to decrease the failure rate of the decoration panel and to improve the productivity of the decoration panel.

Furthermore, since the decoration panel is non-conductive, it may be unnecessary to separately remove a partial region at which a manipulation portion to be touched with a user's hand is mounted.

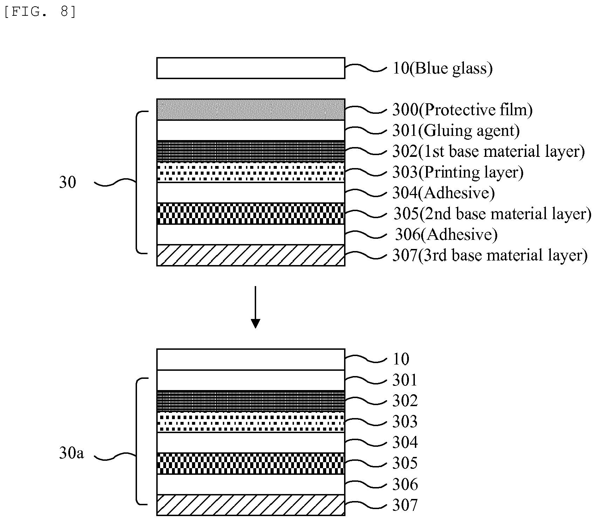

FIG. 8 illustrates an example laminated structure of another decoration film, that does not form part of the invention, for better understanding of features of the invention.

As shown in FIG. 8, the decoration film 30 has a structure in which a protective film 300, a gluing agent 301, a first base material layer 302, a printing layer 303, an adhesive 304, a second base material layer 305, an adhesive 306, and a third base material layer 307 are laminated.

In the decoration film of FIG. 8, the protective film 300, the gluing agent 301, the printing layer 303, the second base material layer 305, the adhesive 306, and the third base material layer 307 may be identical to the components shown in FIG. 4.

In some implementations, the first base material layer 302 is a roll-type PET film and can include an optical PET film having high optical transmittance. The printing layer 303 is printed on a lower surface of the first base material layer 302, using a gravure method, thereby designing a color of the decoration panel.

The second base material layer 305 is adhered to the lower surface of the printing layer 303 by the adhesive 304. In this case, the second base material layer 305 can include a non-conductive mirror PET film as a roll-type film made of the same material as the first base material layer 203 described above.

Like the second base material layer 205 described above, the third base material layer 307 can include any one of the PE film and the PVC film.

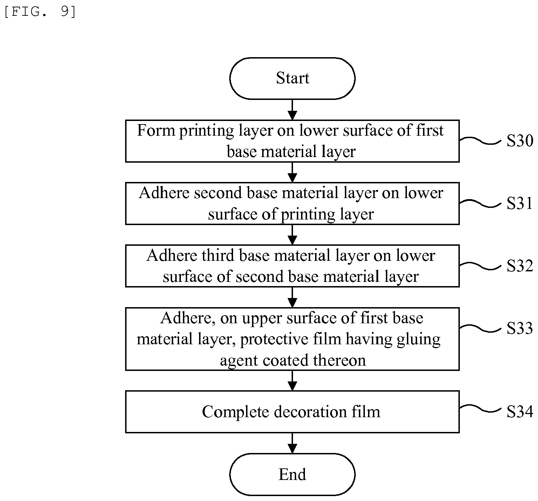

FIG. 9 illustrates an example process of manufacturing the decoration film shown in FIG. 8, that does not form part of the invention, for better understanding of features of the invention. As described above, the printing layer 303 is formed on the lower surface of the first base material 302 that is a roll-type PET film, using a micro gravure method (S30), thereby designing a luxurious color of the decoration panel.

The adhesive 304 is coated on the lower surface of the printing layer 303, and the second base material layer 305 that is the non-conductive mirror PET film simultaneously having the mirror effect and the characteristic of non-conductivity is then adhered to the printing layer 304 (S31). Subsequently, the adhesive 306 is coated on the lower surface of the second base material layer 305, and the third base material layer as a scattering prevention layer, including any one of the PE film or the PVC film, is then adhered to the second base material layer 305.

Then, the OCA that is a roll-type transparent double-faced tape having high optical transmittance is adhered to the upper surface of the first base material layer 302 (S33), thereby completing the roll-type decoration film 30 (S34).

The printing layer 303 may be formed on the lower surface of the first base material layer 302 that is the PET film laminated on the non-conductive mirror PET film, so that the gluing agent 301 and the printing layer 303 do not come in contact with each other. Accordingly, it may be possible to reduce (e.g., prevent) in advance the possibility that a decolorization phenomenon or the like can occur due to a chemical reaction.

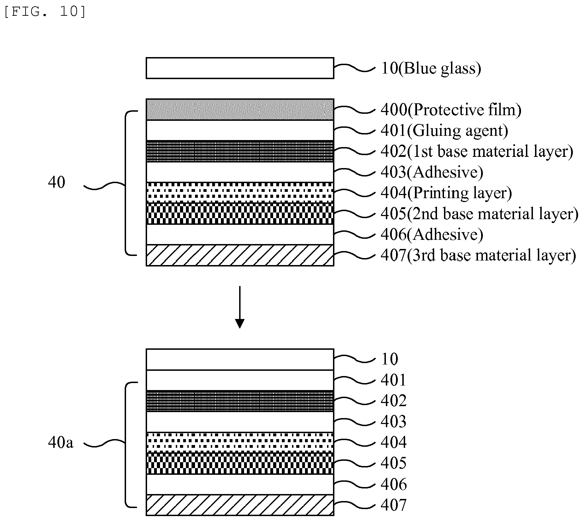

FIG. 10 illustrates a laminated structure of a decoration film, according to he invention.

The decoration film 40 has a structure in which a protective film 400, a gluing agent 401, a first base material 402, an adhesive 403, a printing layer 404, a second base material layer 405, an adhesive 406, and a third base material layer 407 are laminated.

In the decoration film of FIG. 10, the protective film 400, the gluing agent 401, the printing layer 404, the second base material layer 405, the adhesive 406, and the third base material layer 407 may be identical to the components shown in FIG. 4. The second base material layer 405, the adhesive 406, and the third base material layer 407 also may be identical to the second base material layer 305, the adhesive 306, and the third base material layer 307 described above.

In some examples, the first base material layer 402 is a roll-type PET film and can include an optical PET film having high optical transmittance. The second base material layer 405 having the printing layer 404 formed thereon is adhered to a lower surface of the first base material layer 402 by the adhesive 403.

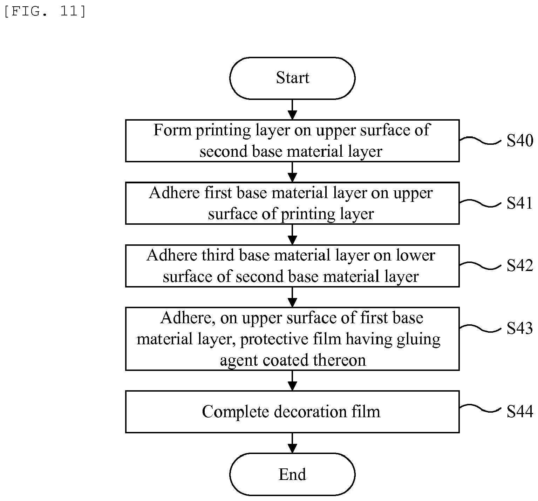

FIG. 11 illustrates an example process of manufacturing the decoration film shown in FIG. 10. As described above, the printing layer 404 is formed on an upper surface of the second base material layer 405 that is a non-conductive mirror PET film simultaneously having a mirror effect and a characteristic of non-conductivity, using a micro gravure method (S40), thereby designing a luxurious color of the decoration panel.

The adhesive 403 is coated on an upper surface of the printing layer 404, and the first base material layer 402 that is an optical PET film having high optical transmittance is then adhered to the printing layer 404 (S41). Subsequently, the third base material layer 407 as a scattering prevention layer, including any one of the PE film or the PVC film, is adhered to the lower surface of the second base material layer 405 (S42).

Then, the protective film 400 is attached to the upper surface, e.g., one surface of the first base material layer 402, and an optical transparent double-face tape, on which a gluing agent having high optical transmittance is coated, is adhered to the upper surface of the first base material layer 402 (S43), thereby completing the roll-type decoration film 40 (S44).

The printing layer 404 formed on the second base material layer 405 that is the non-conductive mirror PET film is protected by the first base material layer 402 that is the optical PET film having high optical transmittance, so that the gluing agent 401 and the printing layer 404 do not come in contact with each other. Accordingly, it may be possible to reduce (e.g., prevent) in advance the possibility that a decolorization phenomenon or the like can occur due to a chemical reaction.

The decoration panels described throughout this disclosure can be applied not only to decoration panels of home appliances, such as a refrigerator, a washing machine, and an air conditioner, but also to various types of electronic devices, such as a smart phone.

As described above, structure and operational examples have been described in detail with reference to appended drawings. However, the disclosure is not limited to the above and various modifications and different implementations are possible and fall within the scope of the disclosure. Therefore, actual scope should be determined by what is defined by the appended claims.

Since the roll-type decoration film, in which a base material layer that is a non-conductive mirror PET film is laminated, is used, it may be unnecessary to directly deposit nickel (Ni) on a lower surface of blue glass, thereby potentially decreasing the failure rate of the decoration panel.

Further, it may be possible to improve the productivity of the decoration panel through a continuous roll-type manufacturing process.

Further, since the decoration panel entirely has non-conductivity, it may be unnecessary to separately remove a partial region at which a manipulation portion to be touched with a user's hand is mounted. Accordingly, it may be possible to improve the productivity of the decoration panel by more efficiently performing and simplifying the manufacturing process of the decoration panel.

## Claims

1. A decoration film (40), comprising:
a first base layer (402);
a gluing agent (401) coated on an upper surface of the first base layer (402) for allowing the decoration film (40) to be attached to a glass panel (10);
a second base layer (405) disposed below the first base layer (402);
a printing layer (404) disposed between the first base layer (402) and the second base layer (405);
a third base layer (407) disposed below the second base layer (405) and adhered to a lower surface of the second base layer (405) by an adhesive (406),
**characterized in that** the printing layer (404) is formed on an upper surface of the second base layer (405),
wherein the second base layer (405) is adhered to a lower surface of the first base layer (402) by an adhesive (403) which is coated on an upper surface of the printing layer (404),
wherein the third base layer (407) is a scattering prevention film which allows the glass panel (10) to be adhered to the decoration film (40) after the glass panel (10) is broken,
and wherein the second base layer (405) is a non-conductive mirror polyethylene terephthalate (PET) film comprising a plurality of polymer layers having different refractive indices and thicknesses.

2. The decoration film of claim 1, wherein the first base layer (402) is an optical PET film having high optical transmittance.

3. The decoration film of one of the preceding claims, further comprising a protective film (400) adhered on the gluing agent (401),
wherein the protective film (400) is adapted to be separable from the gluing agent (401) when attaching the decoration film (40) to the glass panel (10).

4. The decoration film of one of the preceding claims, wherein the scattering prevention film is one of a polyethylene (PE) film and a poly vinyl chloride (PVC) film.

5. A method of manufacturing a decoration film (40) according to claim 1, comprising:
forming a printing layer (404) on an upper surface of a second base layer (405), the second base layer (405) being a non-conductive mirror PET film comprising a plurality of polymer layers having different refractive indices and thicknesses;
coating an adhesive (403) on an upper surface of the printing layer (404);
adhering a first base layer (402) to the upper surface of the printing layer (404) using the adhesive (403) coated on the upper surface of the printing layer (404), the first base layer (402) being a PET film;
coating an adhesive (406) on a lower surface of the second base layer (405);
adhering a third base layer (407) to the lower surface of the second base layer (405) using the adhesive (406) coated on the lower surface of the second base layer (405), the third base layer (407) being a scattering prevention film which allows a glass panel (10) to be adhered to the decoration film (40) after the glass panel (10) is broken; and
adhering a protective film (400) to an upper surface of the first base layer (402) using a gluing agent (401) that has high optical transmittance and that is coated on the protective film (400).

6. A decoration panel comprising a decoration film (40) according to one of claims 1 to 4 and a glass panel (10).

7. The decoration panel of claim 6, wherein the decoration film (40) is attached to at least a portion of the glass panel (10) at which a user's touch for a manipulation occurs.

## Patentansprüche

1. Dekorationsfolie (40), die Folgendes umfasst:
eine erste Basisschicht (402);
ein Klebemittel (401), mit dem eine Oberseite der ersten Basisschicht (402) beschichtet ist, um zu ermöglichen, dass die Dekorationsfolie (40) an einer Glasscheibe (10) angebracht wird;
eine zweite Basisschicht (405), die unter der ersten Basisschicht (402) angeordnet ist;
eine Druckschicht (404), die zwischen der ersten Basisschicht (402) und der zweiten Basisschicht (405) angeordnet ist;
eine dritte Basisschicht (407), die unter der zweiten Basisschicht (405) angeordnet ist und durch einen Klebstoff (406) an eine Unterseite der zweiten Basisschicht (405) geklebt ist, **dadurch gekennzeichnet, dass**
die Druckschicht (404) an einer Oberseite der zweiten Basisschicht (405) gebildet ist, wobei
die zweite Basisschicht (405) durch einen Klebstoff (403), mit dem eine Oberseite der Druckschicht (404) beschichtet ist, an eine Unterseite der ersten Basisschicht (402) geklebt ist,
die dritte Basisschicht (407) eine Streuverhinderungsfolie ist, die ermöglicht, dass die Glasscheibe (10) an die Dekorationsfolie (40) geklebt wird, nachdem die Glasscheibe (10) gebrochen ist, und
die zweite Basisschicht (405) eine nichtleitende Spiegel-Polyethylen-Terephthalat-Schicht (Spiegel-PET-Schicht) ist, die mehrere Polymerschichten, die verschiedene Brechungsindizes und Dicken besitzen, enthält.

2. Dekorationsfolie nach Anspruch 1, wobei die erste Basisschicht (402) eine optische PET-Folie ist, die einen hohen optischen Durchlassgrad besitzt.

3. Dekorationsfolie nach einem der vorhergehenden Ansprüche, die ferner eine Schutzfolie (400) umfasst, die an das Klebemittel (401) geklebt ist, wobei
die Schutzfolie (400) ausgelegt ist, vom Klebemittel (401) trennbar zu sein, wenn die Dekorationsfolie (40) an die Glasscheibe (10) geklebt wird.

4. Dekorationsfolie nach einem der vorhergehenden Ansprüche, wobei die Streuverhinderungsfolie eine Polyethylenfolie (PE-Folie) oder ein Polyvinylchloridfolie (PVC-Folie) ist.

5. Verfahren zum Herstellen einer Dekorationsfolie (40) nach Anspruch 1, das Folgendes umfasst:
Bilden einer Druckschicht (404) an einer Oberseite einer zweiten Basisschicht (405), wobei die zweite Basisschicht (405) eine nichtleitende Spiegel-PET-Schicht ist, die mehrere Polymerschichten, die verschiedene Brechungsindizes und Dicken besitzen, enthält;
Beschichten einer Oberseite der Druckschicht (404) mit einem Klebstoff (403);
Kleben einer ersten Basisschicht (402) an die Oberseite der Druckschicht (404) unter Verwendung des Klebstoffs (403), mit dem die Oberseite der Druckschicht (404) beschichtet ist, wobei die erste Basisschicht (402) eine PET-Schicht ist;
Beschichten einer Unterseite der zweiten Basisschicht (405) mit einem Klebstoff (406);
Kleben einer dritten Basisschicht (407) an die Unterseite der zweiten Basisschicht (405) unter Verwendung des Klebstoffs (406), mit dem die Unterseite der zweiten Basisschicht (405) beschichtet ist, wobei die dritte Basisschicht (407) eine Streuverhinderungsfolie ist, die ermöglicht, dass die Glasscheibe (10) an die Dekorationsfolie (40) geklebt wird, nachdem die Glasscheibe (10) gebrochen ist; und
Kleben einer Schutzfolie (400) unter Verwendung eines Klebemittels (401), das einen hohen optischen Durchlassgrad besitzt, an eine Oberseite der ersten Basisschicht (402).

6. Dekorationsfeld, das eine Dekorationsfolie (40) nach einem der Ansprüche 1 bis 4 und eine Glasscheibe (10) umfasst.

7. Dekorationsfeld nach Anspruch 6, wobei die Dekorationsfolie (40) mindestens an einem Teil der Glasscheibe (10) angebracht ist, an dem eine Eingabe eines Anwenders für eine Manipulation erfolgt.

## Revendications

1. Film de décoration (40), comprenant :
une première couche de base (402) ;
un agent collant (401) enduit sur une surface supérieure de la première couche de base (402) pour permettre au film de décoration (40) d'être attaché à un panneau de verre (10) ;
une deuxième couche de base (405) disposée au-dessous de la première couche de base (402) ;
une couche d'impression (404) disposée entre la première couche de base (402) et la deuxième couche de base (405) ;
une troisième couche de base (407) disposée au-dessous de la deuxième couche de base (405) et adhérée à une surface inférieure de la deuxième couche de base (405) par un adhésif (406),
**caractérisé en ce que** la couche d'impression (404) est formée sur une surface supérieure de la deuxième couche de base (405),
dans lequel la deuxième couche de base (405) est adhérée à une surface inférieure de la première couche de base (402) par un adhésif (403) qui est enduit sur une surface supérieure de la couche d'impression (404),
dans lequel la troisième couche de base (407) est un film de prévention de dispersion qui permet au panneau de verre (10) d'être adhéré au film de décoration (40) après que le panneau de verre (10) est cassé,
et dans lequel la deuxième couche de base (405) est un film de polyéthylène téréphtalate (PET) de miroir non conducteur comprenant une pluralité de couches de polymère présentant des indices de réfraction différents et des épaisseurs différentes.

2. Film de décoration selon la revendication 1, dans lequel la première couche de base (402) est un film de PET optique présentant une grande transmittance optique.

3. Film de décoration selon l'une des revendications précédentes, comprenant en outre un film de protection (400) adhéré sur l'agent collant (400),
dans lequel le film de protection (400) est apte à être séparable de l'agent collant (401) lors de l'attachement du film de décoration (40) au panneau de verre (10).

4. Film de décoration selon l'une des revendications précédentes, dans lequel le film de prévention de dispersion est l'un d'un film de polyéthylène (PE) et d'un film de polychlorure de vinyle (PVC).

5. Procédé de fabrication d'un film de décoration (40) selon la revendication 1, comprenant :
la formation d'une couche d'impression (404) sur une surface supérieure d'une deuxième couche de base (405), la deuxième couche de base (405) étant un film de PET de miroir non conducteur comprenant une pluralité de couches de polymère présentant des indices de réfraction différents et des épaisseurs différentes ;
l'enduit d'un adhésif (403) sur une surface supérieure de la couche d'impression (404) ;
l'adhésion d'une première couche de base (402) sur la surface supérieure de la couche d'impression (404) en utilisant l'adhésif (403) enduit sur la surface supérieure de la couche d'impression (404), la première couche de base (402) étant un film de PET ;
l'enduit d'un adhésif (406) sur une surface inférieure de la deuxième couche de base (405) ;
l'adhésion d'une troisième couche de base (407) sur la surface inférieure de la deuxième couche de base (405) en utilisant l'adhésif (406) enduit sur la surface inférieure de la deuxième couche de base (405), la troisième couche de base (407) étant un film de prévention de dispersion qui permet à un panneau de verre (10) d'être adhéré au film de décoration (40) après que le panneau de verre (10) est cassé ; et
l'adhésion d'un film de protection (400) à une surface supérieure de la première couche de base (402) en utilisant un agent collant (401) présentant une grande transmittance optique et qui est enduit sur le film de protection (400).

6. Panneau de décoration comprenant un film de décoration (40) selon l'une des revendications 1 à 4 et un panneau de verre (10).

7. Panneau de décoration selon la revendication 6, dans lequel le film de décoration (40) est attaché à au moins une portion du panneau de verre (10) à laquelle un toucher d'un utilisateur pour une manipulation survient.
